# EUROPEAN PATENT APPLICATION

(11) **EP 1 790 498 A1**
(43) Date of publication of application: **30.05.2007**
(21) Application number: 06024018.1
(22) Date of filing: 20.11.2006
(51) Int. Cl.: B44F 9/04, B32B 1/02, B29C 51/10, B29C 51/14, B44C 5/04

(54) **Industrial production process of imitation marble objects obtained from thermoforming material**

(30) Priority: 24.11.2005 IT MC20050125
(71) Applicant: S.C. DI SAMPAOLO FABIOLA, 60025 Loreto AN (IT)
(72) Inventor: Centinari, Roberto, 60025 Loreto (AN) (IT)
(74) Representative: Baldi, Claudio

(57) **Abstract**

The present invention refers to an industrial production process of imitation marble objects, obtained from thermoforming material, according to which the image that reproduces marble streaks is printed against the back of a transparent sheet (1) of thermoforming material that is vacuum thermoformed and coated with a layer of hardening resin (4) on the back.

## Description

The present patent application for industrial invention refers to an industrial production process of imitation marble objects, obtained from thermoforming material, and to the objects obtained with the said process.

In particular, the process of the invention has been devised to produce sanitary articles, such as bathroom and kitchen sinks, shower trays, and bathtubs. Currently, the market offers imitation marble objects obtained from thermoforming materials; however, they have a sheet-like structure that is characterised by different hardness or solidity compared to original marble.

To manufacture the said objects, a drawing that reproduces marble streaks is usually printed on a suitable support panel or sheet.

The preferred technique is the so-called sublimatic technology, according to which the sheet to be printed is hot-pressed to provide thermal transfer of the ink from the sublimatic paper to the sheet surface.

This printing process is especially interesting and suitable for this field of application, since the ink penetrates the printed surface, in such as way that the printed surface can be washed with any type of detergent, or rubbed without the risk of removing the ink and lose the visual effect of imitation marble streaks.

This explains the reason why other printing techniques, such as silkscreening, must be discarded, regardless of being simpler and less expensive than the sublimatic technique.

Although these objects look like marble, this first impression immediately disappears upon first touch, due to the fact that they are not as hard and solid as marble.

Moreover, if the user taps his/her fingers on them, these objects produce a sound that immediately demonstrates their box-shaped structure.

Starting from these observations on the features of the known technique, a new industrial production process of imitation marble objects made of thermoforming material has been devised, capable of manufacturing objects characterised by visual, tactile and sound sensations comparable to the typical properties of marble.

Another purpose of the present invention is to provide a new industrial production process of imitation marble objects made of thermoforming materials, which is implemented without necessarily using the sublimatic printing technique, it being compatible with any other printing technique that guarantees the stability of the printed image during thermoforming of the sheet.

The said purposes have been achieved by the present invention, as illustrated in the first and second claim.

The process of the invention makes use of a sheet made of a transparent thermoforming material, such as methacrylate, in such a way that the imitation marble streaks are printed on the back of the sheet, that is the opposite side to the external surface of the finished object.

This fact eliminates the need to use the sublimatic printing technique, since the back of the sheet will not come in contact with liquids, detergents, abrasive agents or sharp objects during use.

Since the sheet is subjected to a vacuum thermoforming process, it appears evident that the said printing technique must guarantee the stability of the printed image under the thermal and mechanical stress conditions that occur during the hot-drawing process of the material, during the vacuum thermoforming process.

One of the printing techniques that are compatible with the said vacuum thermoforming process is the so-called transfer technique, according to which the image to be reproduced on the panel is first printed on a support film and then thermally transferred from the film to the panel.

One of the advantages offered by this technique compared to sublimatic printing consists in the possibility to recover the printed sheet of transparent thermoforming material in case of imperfect printing, since the thermally transferred ink does not penetrate the sheet and can be easily removed by washing.

In order to provide higher contrast to the printed image, which may not be very evident due to the transparency of the thermoforming sheet, a veil of paint of appropriate colour for the desired visual effect is laid on the back of the printed sheet.

Moreover, the function of the said veil of paint is to stabilise the printed image on the back of the transparent thermoforming sheet that is then subjected to a traditional vacuum thermoforming process in order to give the box-shaped configuration to the object to be produced, such as a kitchen sink or a shower tray.

The semi-finished product obtained from the thermoforming process is characterised by high flexibility, due to the low thickness of the sheet, regardless of the deep-drawing process.

In order to provide higher consistency to the semi-finished product, thus ensuring the same tactile sensation of marble, a thick layer of resin coating is sprayed or poured on the back of the transparent printed thermoformed sheet, such a polyurethanic or acrylic resin.

The density of the resin can be increased with the addition of calcium carbonate, and the hardness of the resin can be increased with the addition of catalysing substances of known type.

For major clarity, the description of the invention continues with reference to the enclosed drawings, which are intended for illustration purposes only, and not in a limiting sense, whereby:

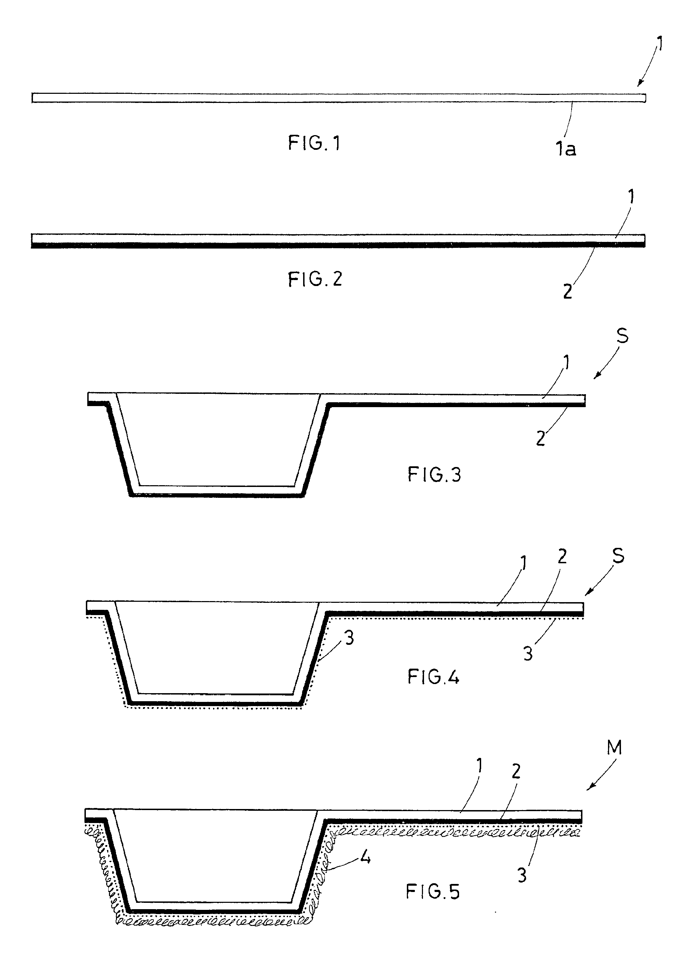

- figures 1 to 5 are a diagrammatic representation of the sequence of manufacturing operations of a kitchen sink produced according to the process of the invention.

With reference to the aforementioned figures, the process of the invention provides for production of an object (M) starting from a sheet of thermoforming transparent material (1), which is subjected to the following operations:
a - printing of the image (2) reproducing the streaks of the marble to be imitated on the back (1a) of the sheet (1);
b - vacuum thermoforming of the sheet (1) in order to obtain a semi-finished product (S) with the shape of the object (M) to be produced;
c - application of a layer of non-transparent paint (3) above the printed image (2);
d - application of a layer of resin (4) on the paint (3), with sufficient thickness to give (S) the object (S) a texture similar to real marble, at least in terms of touch and percussion.

If a suitably pigmented, non-transparent resin (4) is applied, the application of the non transparent paint (3) is no longer necessary.

As mentioned earlier, the image (2) can be printed with any printing technique, as long as compatible with the following vacuum thermoforming process; two of the said compatible printing techniques are the so-called sublimatic and "transfer techniques.

For instance, the thermoforming transparent sheet (1) can be made of methacrylate, the paint (3) can be an acrylic paint, and the layer of resin (4) can be polyurethanic resin.

## Claims

1. Industrial production process of imitation marble objects obtained from thermoforming material, **characterised in that** it provides for the following operations:
a - printing of the image (2) reproducing the streaks of the marble to be imitated on the back (1a) of a transparent sheet (1) made of thermoforming material;
b - vacuum thermoforming of the sheet (1) in order to obtain a semi-finished product (S) with the shape of the object (M) to be produced;
c - application of a layer of non-transparent paint (3) above the printed image (2);
d - application of a layer of resin (4) on the paint (3), with sufficient thickness to give (S) the object (S) a texture similar to real marble, at least in terms of touch and percussion;
it being provided that the image (2) is printed with any printing technique, as long as compatible with the said vacuum thermoforming process.

2. Industrial production process of imitation marble objects obtained from thermoforming material, **characterised in that** it provides for the following operations:
A - printing of the image (2) reproducing the streaks of the marble to be imitated on the back (1a) of a transparent sheet (1) made of thermoforming material;
B - vacuum thermoforming of the sheet (1) in order to obtain a semi-finished product (S) with the shape of the object (M) to be produced;
C - application of a layer of non-transparent resin (4) above the printed image (2), having sufficient thickness to give the object (S) a texture similar to real marble, in terms of touch and percussion;
it being provided that the image (2) is printed with any printing technique, as long as compatible with the said vacuum thermoforming process;

3. Process as defined in the previous claims, **characterised in that** the image (2) is printed on the back (1a) using the sublimatic printing technique.

4. Process as defined in claims 1 and 2, **characterised in that** the image (2) is printed on the back (1a) using the transfer printing technique.

5. Process as defined in any of the previous claims, **characterised in that** the sheet (1) is made of methacrylate.

6. Process as defined in any of the previous claims, **characterised in that** the layer of resin (4) is made of polyurethane or acrylic resin with the addition of calcium carbonate and catalysing substances of known type, in order to increase hardness.

7. Object made of imitation marble, obtained by printing thermoforming material, **characterised in that** it is formed from a shaped sheet (1), whose internal side (1a) is printed with an image (2) reproducing the streaks of real marble, covered by a layer of non-transparent paint (3), covered in turn by a thick layer of resin (4)

8. Object made of imitation marble, obtained by printing thermoforming material, **characterised in that** it is formed from a shaped sheet (1), whose internal side (1a) is printed with an image (2) reproducing the streaks of real marble, covered with a thick layer of non transparent resin (4).

9. Object made of imitation marble, as defined in claims 7 and 8, **characterised in that** it consists in a kitchen sink .

10. Object made of imitation marble, as defined in claims 7 and 8, **characterised in that** it consists in a bathroom sink.

11. Object made of imitation marble, as defined in claims 7 and 8, **characterised in that** it consists in a shower tray.

12. Object made of imitation marble, as defined in claims 7 and 8, **characterised in that** it consists in a bathtub.
